# EUROPEAN PATENT SPECIFICATION

(11) **EP 3 813 185 B1**
(45) Date of publication and mention of the grant of the patent: **11.05.2022**
(21) Application number: 20200663.1
(22) Date of filing: 08.10.2020
(51) Int. Cl.: H01M 50/249, B60L 50/64, H01M 50/262, H01M 50/289, B60L 50/60

(54) **ELECTRIC-VEHICLE BATTERY AND ELECTRIC VEHICLE**
BATTERIE VON ELEKTROFAHRZEUGEN UND ELEKTROFAHRZEUG
BATTERIE DE VÉHICULE ÉLECTRIQUE ET VÉHICULE ÉLECTRIQUE

(30) Priority: 21.10.2019 JP 2019192185
(43) Date of publication of application: 28.04.2021
(73) Proprietor: YAMAHA HATSUDOKI KABUSHIKI KAISHA, Iwata-shi Shizuoka 438-8501 (JP)
(72) Inventor: YAZAKI, Katsuya, Iwata-shi,, Shizuoka 438-8501 (JP); MOCHIZUKI, Toshiki, Iwata-shi,, Shizuoka 438-8501 (JP); TSUCHIYA, Fumiaki, Iwata-shi,, Shizuoka 438-8501 (JP); GOTO, Shintaro, Iwata-shi,, Shizuoka 438-8501 (JP); SUZUKI, Kenichiro, Iwata-shi,, Shizuoka 438-8501 (JP)
(74) Representative: Grünecker Patent- und Rechtsanwälte PartG mbB

(56) References cited:
- EP-A1- 3 537 502
- EP-A2- 2 280 436
- JP-A- 2003 267 283
- US-A1- 2016 308 180

## Description

The present invention relates to an electric saddled vehicle An example of an electric saddled vehicle can be taken from the prior art document EP 3 537 502 A1.

An electric vehicle has a battery case for housing a battery cell (WO 2014/102853). The battery cell is covered with an upper case, an electric equipment is above the upper case, and the electric equipment is covered with an electric equipment cover.

With the electric equipment stacked above the battery cell, the battery case has an overall shape of being portrait (long in a vertical direction). The battery case in such a shape is disadvantageous due to its limited applicability to vehicle types.

It is the object of the present invention to provide an electric saddled vehicle that allows vehicle design flexibility.

According to the present invention said object is solved by an electric saddled vehicle according to claim 1. Preferred embodiments are laid down in the dependent claims.

The electric-vehicle battery of the electric saddled vehicle of the invention includes: a battery cell; an input/output component to/from the battery cell; a battery case including a main housing unit in which the battery cell is housed, the battery case including a sub-housing unit in which the input/output component is housed, the main housing unit and the sub-housing unit being adjacent to each other in a first direction, the sub-housing unit having a contour smaller in width in a second direction perpendicular to the first direction than the main housing unit, the battery case having a recess made up of adjacent external surfaces of the main housing unit and the sub-housing unit; and a connector situated in the recess of the battery case and electrically connected to the input/output component. Z The battery case is situated so that the second direction matches a vehicle width direction.

Thus, the connector, which is in the recess, has a small protrusion from the battery case in the second direction. This makes it possible to position the electric-vehicle battery so that the first direction matches a forward and backward direction of the electric vehicle, improving vehicle design flexibility.

### BRIEF DESCRIPTION OF THE DRAWINGS

FIG. 1 is a perspective view of an electric vehicle in an embodiment.
FIG. 2 is a left side view of an internal structure of the electric vehicle.
FIG. 3 is a front view of the internal structure in FIG. 2 except for a front wheel.
FIG. 4 is a schematic cross-sectional view of a battery.
FIG. 5 is an exploded perspective view of a battery cell and an input/output component.
FIG. 6 is a perspective view, from diagonally above, of a front and a left side of the battery.
FIG. 7 is a perspective view, from diagonally above, of the front and a right side of the battery.
FIG. 8 is a partly enlarged left side view of the internal structure of the vehicle.
FIG. 9 is a partly enlarged right side view of the internal structure of the vehicle.
FIG. 10 is a circuit diagram of the battery cell during discharge.
FIG. 11 is a circuit diagram of the battery cell during charge.

### DETAILED DESCRIPTION

The embodiment(s) of the present teaching is (are) described below with reference to the drawings. However, the present teaching can be implemented in various ways to the extent that it does not deviate from the main point of view, and is not to be construed as being limited to the description of the embodiment(s) exemplified below. The invention is defined in the appended claims.

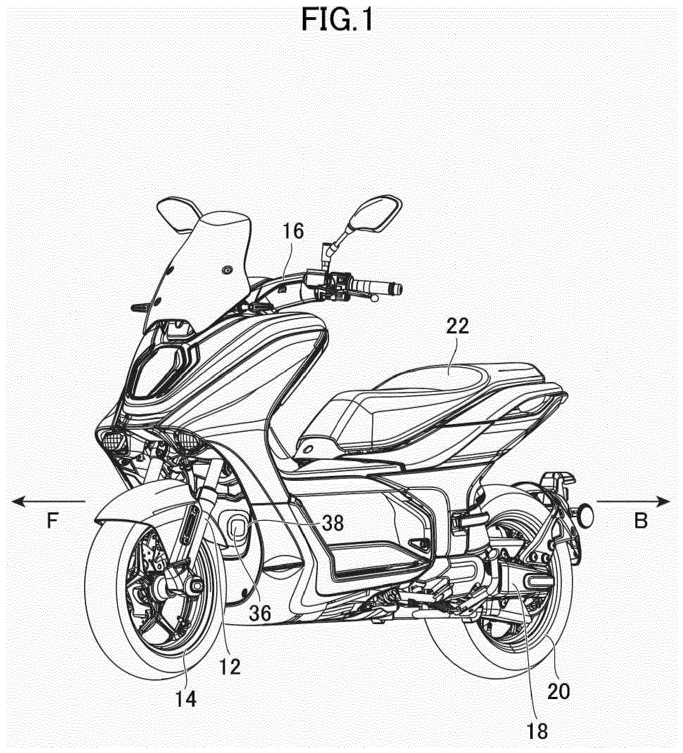

FIG. 1 is a perspective view of an electric vehicle in an embodiment. The electric saddled vehicle is an electric motorcycle with any number of wheels. The electric vehicle may be a four-wheel vehicle for driving on irregular terrain. The electric vehicle may be an on-road type, an off-road type, or a scooter type.

In the embodiment, a direction is based on a straight forward direction of the electric vehicle. For example, arrows F and B in FIG. 1 represent a forward direction and a backward direction, respectively. Upper and lower directions are based on the forward direction. The right and left are based on the forward direction.

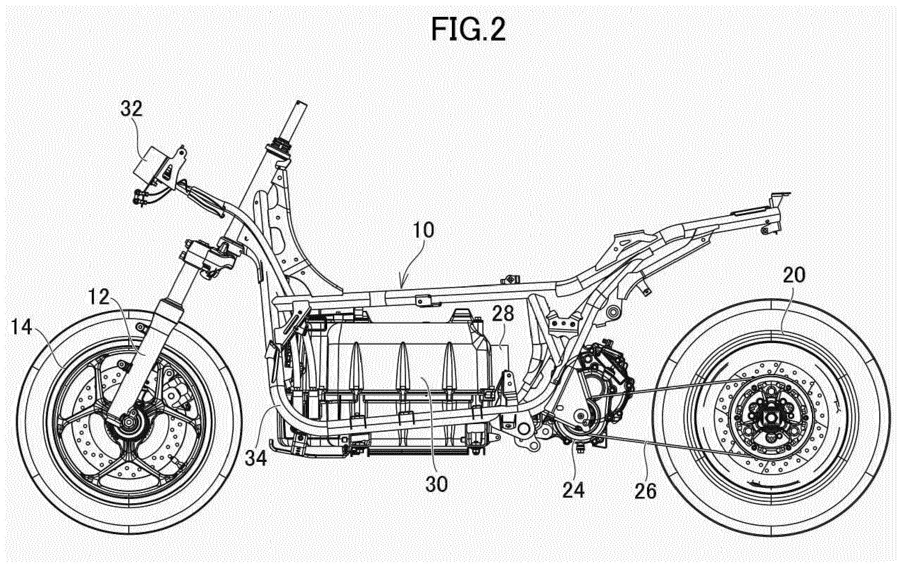

FIG. 2 is a left side view of an internal structure of the electric vehicle. The electric vehicle has a frame 10. A front fork 12 is supported at a front end of the frame 10 and is rotatable in the right and left directions. A front wheel 14 is rotatably supported at a bottom end of the front fork 12. A handle 16 (FIG. 1) is disposed on a top end of the front fork 12 for steering. A rear unit 18 is supported at a lower rear portion of the frame 10 and is swingable in the upper and lower directions. A rear wheel 20 is rotatably supported at a rear end of the rear unit 18. A seat 22 (FIG. 1) for a driver to sit is disposed at an upper rear portion of the frame 10.

The electric vehicle has a drive motor 24 for driving the rear wheel 20 of a driving wheel. The drive motor 24 may be a three-phase alternating-current motor. The drive motor 24 is supported by the frame 10. The drive motor 24 transmits driving force to the rear wheel 20 through a transmission member such as a belt 26. Alternatively, the drive motor 24 may drive the front wheel 14, or drive both the front wheel 14 and the rear wheel 20. Rotation, suspension, and speed of the drive motor 24 are controlled by a motor control unit 28.

### [BATTERY]

The electric vehicle has a battery 30. The battery 30 is positioned under the seat 22. For charging the battery 30, a power supply plug (not shown) is inserted into a charge inlet 32.

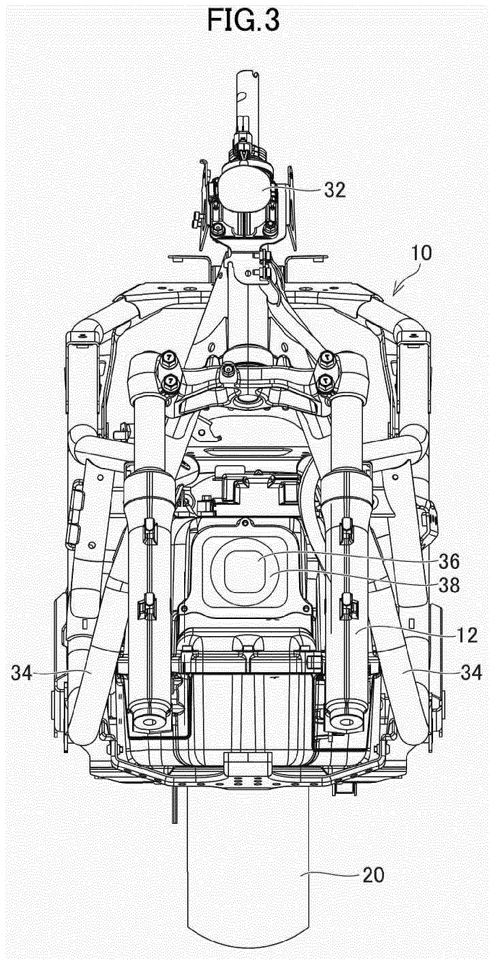

FIG. 3 is a front view of the internal structure in FIG. 2 except for a front wheel. The frame 10 includes a pair of down tubes 34 spaced in a vehicle width direction. The battery 30 in FIG. 2 is between a pair of down tubes 34. That is, the battery 30 is protected by the down tubes 34 outside it. The battery 30 is under the seat 22 at a center in the vehicle width direction.

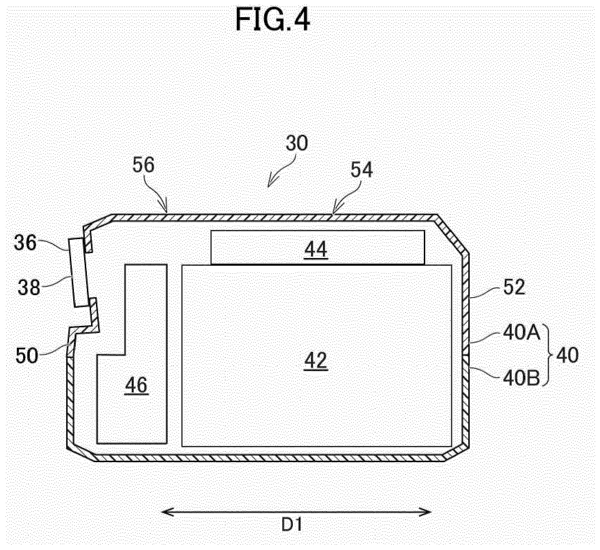

FIG. 4 is a schematic cross-sectional view of the battery 30. The battery 30 includes an exhaust structure 36. The exhaust structure 36 enables pressure relief inside the battery case 40 through an exhaust port 38. The exhaust structure 36 is disposed at a front side and the exhaust port 38 is also disposed at the front side.

### [BATTERY CELL and CONTROL CIRCUIT BOARD]

The battery 30 stores a battery cell 42. The battery 30 has the battery cell 42 (e.g. lithium-ion battery) for supplying power to the motor control unit 28 in FIG. 2. The power supplied to the motor control unit 28 is used for driving and controlling the drive motor 24. A control circuit board 44, for controlling input/output of current to the battery 30, is disposed on the battery cell 42.

### [INPUT/OUTPUT COMPONENT]

The battery 30 has an input/output component 46 to/from the battery cell 42. The input/output component 46 is positioned in the forward direction from the battery cell 42. The input/output component 46 is a box storing components necessary to control the input/output of the current, but may be only electric parts without any box.

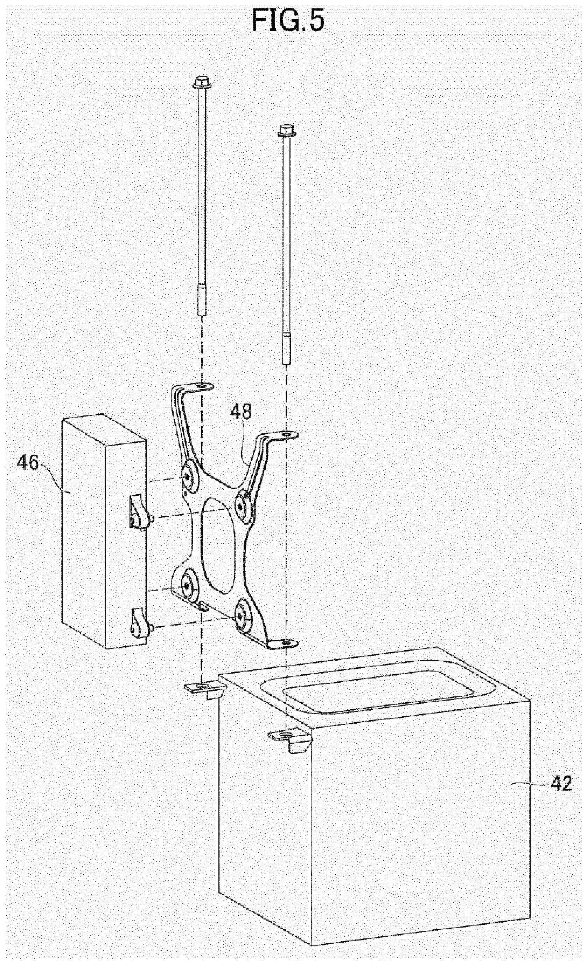

FIG. 5 is an exploded perspective view of the battery cell 42 and the input/output component 46. A bracket 48 is fixed to the battery cell 42. The input/output component 46 is fixed to the bracket 48.

### [BATTERY CASE]

The battery 30 in FIG. 4 has the battery case 40. The battery case 40 stores the battery cell 42. The battery case 40 is made of resin. The battery case 40 in FIG. 2 is positioned under the seat 22 and at the center of the vehicle width direction. The battery case 40 has a front surface 50 facing at least the forward direction. The exhaust structure 36 is attached in an opening in the front surface 50. The battery case 40 has a rear side 52 facing at least the backward direction. The exhaust structure 36 may be modified to be disposed at the rear side 52, with the exhaust port 38 facing backwards.

### [MAIN HOUSING UNIT and SUB-HOUSING UNIT]

The battery case 40 includes a main housing unit 54. The main housing unit 54 stores the battery cell 42. The control circuit board 44 is also stored in the main housing unit 54. The battery case 40 includes a sub-housing unit 56. The sub-housing unit 56 stores the input/output component 46. The main housing unit 54 and the sub-housing unit 56 are next to each other in the first direction D1. The first direction D1 matches the arrows F, B in FIG. 1. For example, the sub-housing unit 56 is positioned next to the main housing unit 54 in the forward direction.

### [RECESS]

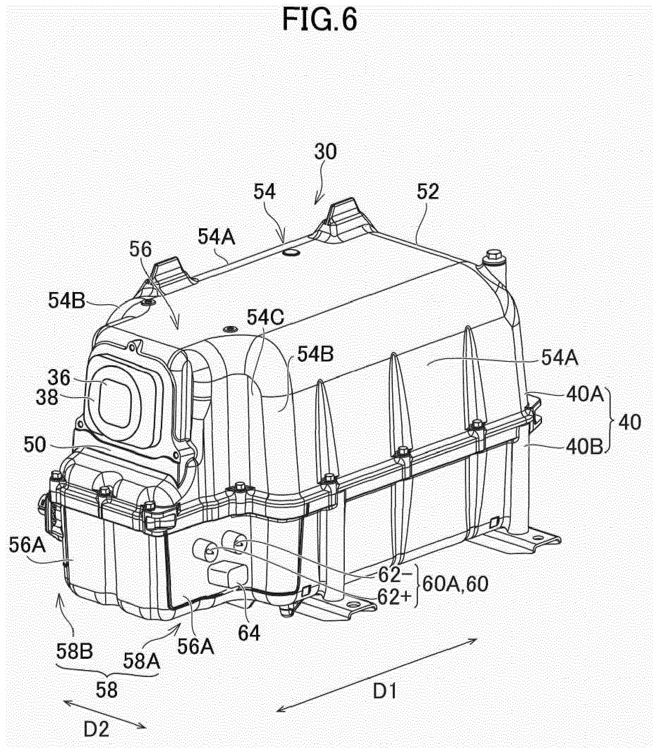

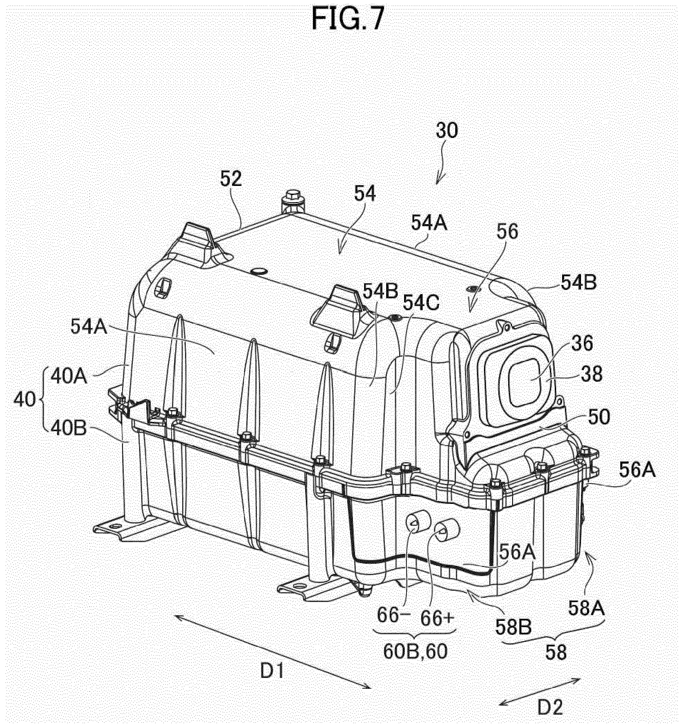

FIG. 6 is a perspective view, from diagonally above, of the front surface 50 and a left side of the battery 30. FIG. 7 is a perspective view, from diagonally above, of the front surface 50 and a right side of the battery 30.

The sub-housing unit 56 is smaller in contour, in width in a second direction D2, than the main housing unit 54. The second direction D2 is perpendicular to the first direction D1. The battery case 40 is positioned so that the width in the second direction D2 matches the vehicle width direction.

The external surface of the main housing unit 54 includes both sides 54A in the second direction D2. The external surface of the sub-housing unit 56 includes both sides 56A in the second direction D2. The both sides 56A of the sub-housing unit 56 are less spaced to each other than the both sides 54A of the main housing unit 54. The sub-housing unit 56 projects in the first direction D1 from the main housing unit 54. The external surface of the main housing unit 54 includes; a pair of curved surfaces 54B that curve from both sides 54A in respective opposed directions along the second direction D2, and a pair of connection surfaces 54C extending from the pair of curved surfaces 54B to the both sides 56A of the sub-housing unit 56. The pair of connection surfaces 54C faces the first direction D1 (forward).

The battery case 40 has a recess 58. The recess 58 is composed of adjacent external surfaces of the main housing unit 54 and the sub-housing unit 56. The recess 58 is composed of each of the both sides 56A of the sub-housing unit 56 and a corresponding one of the pair of connection surfaces 54C of the main housing unit 54. The recess 58 includes a first recess 58A and second recess 58B on both sides in the second direction D2.

### [CONNECTOR]

The battery 30 has a connector 60. The connector 60 is positioned between the battery case 40 and the pair of down tubes 34 (FIG. 3). The connector 60 is protected by the pair of down tubes 34. The connector 60 is electrically connected to the input/output component 46 (FIG. 4).

The connector 60 is disposed in the recess 58 of the battery case 40. The connector 60 is disposed on the both sides 56A of the sub-housing unit 56. The connector 60 is configured to project from the sub-housing unit 56 along the second direction D2 in each of the first recess 58A and the second recess 58B. The connector 60 may be modified to be disposed on the pair of connection surfaces 54C of the main housing unit 54. Thus, the connector 60 is configured to project from the main housing unit 54 in the first direction D1.

In the embodiment, the connector 60 is disposed in the recess 58, less sticking out from the battery case 40 in the second direction D2. Thus, the battery 30 can be disposed in such a way that the first direction D1 matches the forward and backward directions of the electric vehicle, improving flexibility of vehicle design.

In FIG. 6, the connector 60 includes one or more first connectors 60A (e.g. a pair of charge receptacles 62+, 62- and a communication receptacle 64) in the first recess 58A. The communication receptacle 64 is positioned under the pair of charge receptacles 62+, 62. The communication receptacle 64 is electrically connected to the control circuit board 44 through the input/output component 46 (FIG. 4).

In FIG. 7, the connector 60 includes one or more second connectors 60B (e.g. a pair of discharge receptacles 66+, 66-) in the second recess 58B. The connector 60 (first connector 60A and second connector 60B) is positioned under the exhaust structure 36. Specifically, the battery case 40 is composed of an upper case 40A and a lower case 40B, the exhaust structure 36 is disposed on the upper case 40A, and the connector 60 is disposed on the lower case 40B.

### [CABLE]

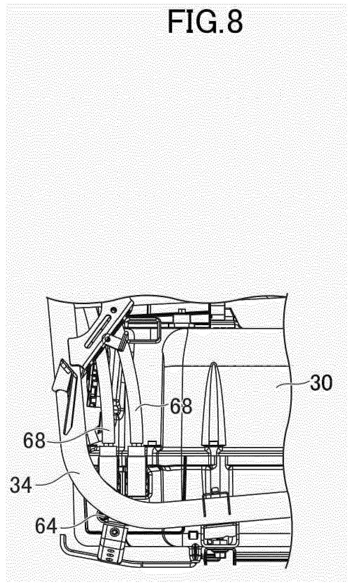

FIG. 8 is a partly enlarged left side view of the internal structure of the vehicle. A pair of charge cables 68 are connected to the pair of respective charge receptacles 62+, 62-(FIG. 6).The pair of charge cables 68 electrically connect the pair of charge receptacles 62+, 62- and the charge inlet 32 (FIG. 2). A communication cable 70 is connected to the communication receptacle 64 (FIG. 6). The communication cable 70 electrically connects the communication receptacle 64 and the motor control unit 28 (FIG. 2).

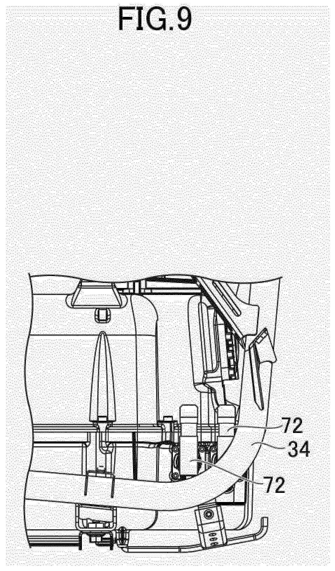

FIG. 9 is a partly enlarged right side view of the internal structure of the vehicle. A pair of discharge cables 72 are connected to the pair of respective discharge receptacles 66+, 66- (FIG. 7). The pair of discharge cables 72 electrically connect the pair of discharge receptacles 66+, 66- and the motor control unit 28 (FIG. 2).

### [INPUT/OUTPUT CIRCUIT]

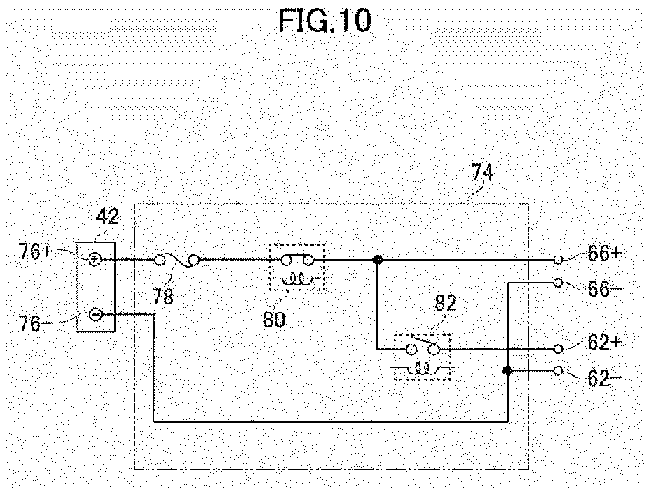

FIG. 10 is a circuit diagram of the battery cell 42 during discharge. The input/output component 46 includes an input/output circuit 74. A fuse 78 for an overcurrent breaker is connected to a plus terminal 76+ of the battery cell 42. In the input/output circuit 74, a fuse 78 is connected to the plus terminal 76+ of the battery cell 42, whereas no fuse is connected to a minus terminal 76-.

A first relay 80 is connected between the fuse 78 and the discharge receptacle 66+ on the plus side. The first relay 80 is configured to receive electric signals from outside and turn on/off the electrical circuit between the battery cell 42 and the discharge receptacle 66+ on the plus side. The discharge receptacle 66- on the minus side is constantly connected to the minus terminal 76- of the battery cell 42. Turning on the first relay 80 can discharge the battery cell 42. That is, the electric vehicle is ready to run.

The charge receptacle 62- on the minus side is connected to the minus terminal 76-of the battery cell 42. The charge receptacle 62+ on the plus side is connected to the discharge receptacle 66+ on the plus side through a second relay 82. In FIG. 10, the second relay 82 is off, disabling charging.

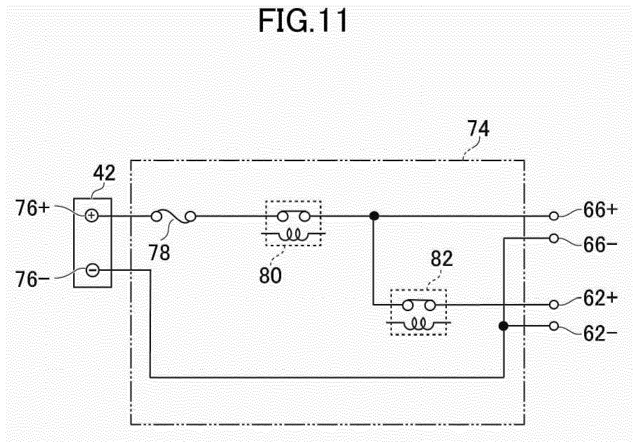

FIG. 11 is a circuit diagram of the battery cell 42 during charge. Turn on the second relay 82, the charge receptacle 62+ on the plus side and the discharge receptacle 66+ on the plus side are electrically continuous. Then, turning on the first relay 80 enables charging. Simultaneously, discharging is possible. That is, discharging during charging is possible.

## Claims

1. An electric saddled vehicle comprising:
an electric-vehicle battery (30); and
a drive motor (24) configured to be supplied with power from the electric-vehicle battery (30),
the electric-vehicle battery (30) comprising:
a battery cell (42);
an input/output component (46) configured to input/output power to/from the battery cell (42);
a battery case (40) including a main housing unit (54) in which the battery cell (42) is housed, the battery case (40) including a sub-housing unit (56) in which the input/output component (46) is housed, the main housing unit (54) and the sub-housing unit (56) being adjacent to each other in a first direction (D1), the sub-housing unit (56) having a contour smaller in width in a second direction (D2) perpendicular to the first direction (D1) than the main housing unit (54), the battery case (40) having a recess (58) made up of adjacent external surfaces of the main housing unit (54) and the sub-housing unit (56); and
a connector (60) situated in the recess (58) of the battery case (40) and electrically connected to the input/output component (46), **characterized in that** the battery case (40) is situated so that the second direction (D2) matches a vehicle width direction.

2. The electric saddled vehicle according to claim 1, **characterized in that** the recess (58) includes a first recess (58A) and a second recess (58B) on both sides in the second direction (D2), and
the connector (60) includes one or more first connectors (60A) in the first recess (58A) and one or more second connectors (60B) in the second recess (58B).

3. The electric saddled vehicle according to claim 2, **characterized in that** the connector (60) protrudes from the sub-housing unit (56) along the second direction (D2) in each of the first recess (58A) and the second recess (58B).

4. The electric saddled vehicle according to claim 2 or 3, **characterized in that** the connector (60) includes a charge receptacle (62+, 62-), a discharge receptacle (66+, 66-), and a communication receptacle (64).

5. The electric saddled vehicle according to claim 4, **characterized in that** the charge receptacle (62+, 62-) is included in the one or more first connectors (60A), and
the discharge receptacle (66+, 66-) is included in the one or more second connectors (60B).

6. The electric saddled vehicle according to claim 4 or 5, **characterized by** a control circuit board (44) in the main housing unit (54) and on the battery cell (42),
wherein the communication receptacle (64) is electrically connected to the control circuit board (44) through the input/output component (46).

7. The electric saddled vehicle according to any one of claims 1 to 6, **characterized by** a bracket (48) attached to the battery cell (42),
wherein the input/output component (46) is fixed to the bracket (48).

8. The electric saddled vehicle according to any one of claims 1 to 7, **characterized in that** the input/output component (46) includes an input/output circuit (74), in which a fuse (78) is connected only to a plus terminal (76) of the battery cell (42).

9. The electric saddled vehicle according to any one of claims 4 to 6, **characterized by**
a charge inlet (32) configured for charging the electric-vehicle battery (30);
a drive motor (24) configured to be supplied with power from the electric-vehicle battery (30);
a motor control unit (28) configured for controlling the drive motor (24);
a charge cable (68) configured for electrically connecting the charge receptacle (62+, 62-) and the charge inlet (32);
a discharge cable (72) configured for electrically connecting the discharge receptacle (66+, 66-) and the motor control unit (28); and
a communication cable (70) configured for electrically connecting the communication receptacle (64) and the motor control unit (28).

10. The electric saddled vehicle according to according to any one of claims 1 to 9, **characterized by** a frame (10) including a pair of down tubes (34) spaced along the vehicle width direction,
wherein the electric-vehicle battery (30) intervenes between the pair of down tubes (34).

11. The electric saddled vehicle according claim 10, **characterized in that** the connector (60) of the electric-vehicle battery (30) intervenes between the battery case (40) and the pair of down tubes (34).

## Patentansprüche

1. Ein Elektro-Sattel-Fahrzeug, das umfasst:
eine Elektro-Fahrzeug-Batterie (30); und
einen Antriebs-Motor (24), der konfiguriert ist, so dass er mit Energie von der Elektro-Fahrzeug-Batterie (30) versorgt wird,
die Elektro-Fahrzeug-Batterie (30) umfasst:
eine Batterie-Zelle (42);
eine Eingangs-/Ausgangs-Komponente (46), die konfiguriert ist, um Energie zu/von der Batterie-Zelle (42) einzugeben/auszugeben;
ein Batterie-Gehäuse (40), das eine Haupt-Gehäuse-Einheit (54), in der die Batterie-Zelle (42) untergebracht ist, beinhaltet, das Batterie-Gehäuse (40) beinhaltet eine Unter-Gehäuse-Einheit (56), in der die Eingangs-/Ausgangs-Komponente (46) untergebracht ist, die Haupt-Gehäuse-Einheit (54) und die Unter-Gehäuse-Einheit (56) sind in einer ersten Richtung (D1) benachbart zueinander, die Unter-Gehäuse-Einheit (56) hat eine Kontur, die in einer zweiten Richtung (D2) senkrecht zur ersten Richtung (D1) eine geringere Breite hat als die Haupt-Gehäuse-Einheit (54), das Batterie-Gehäuse (40) hat eine Ausnehmung (58), die aus benachbarten Außenflächen der Haupt-Gehäuse-Einheit (54) und der Unter-Gehäuse-Einheit (56) gebildet ist; und
einen Verbinder (60), der sich in der Ausnehmung (58) des Batterie-Gehäuses (40) befindet und elektrisch mit der Eingangs-/Ausgangs-Komponente (46) verbunden ist,
**dadurch gekennzeichnet, dass**
das Batterie-Gehäuse (40) so angeordnet ist, dass die zweite Richtung (D2) einer Fahrzeug-Breiten-Richtung entspricht.

2. Das Elektro-Sattel-Fahrzeug gemäß Anspruch 1, **dadurch gekennzeichnet, dass** die Ausnehmung (58) eine erste Ausnehmung (58A) und eine zweite Ausnehmung (58B) auf beiden Seiten in der zweiten Richtung (D2) beinhaltet, und
der Verbinder (60) einen oder mehrere erste Verbinder (60A) in der ersten Ausnehmung (58A) und einen oder mehrere zweite Verbinder (60B) in der zweiten Ausnehmung (58B) beinhaltet.

3. Das Elektro-Sattel-Fahrzeug gemäß Anspruch 2, **dadurch gekennzeichnet, dass** der Verbinder (60) von der Unter-Gehäuse-Einheit (56) entlang der zweiten Richtung (D2) in jeder der ersten Ausnehmung (58A) und der zweiten Ausnehmung (58B) vorsteht.

4. Das Elektro-Sattel-Fahrzeug gemäß Anspruch 2 oder 3, **dadurch gekennzeichnet, dass** der Verbinder (60) eine Lade-Buchse (62+, 62-), eine Entlade-Buchse (66+, 66-) und eine Kommunikations-Buchse (64) beinhaltet.

5. Das Elektro-Sattel-Fahrzeug gemäß Anspruch 4, **dadurch gekennzeichnet, dass** die Lade-Buchse (62+, 62-) in dem einen oder den mehreren ersten Anschlüssen (60A) enthalten ist, und
die Entlade-Buchse (66+, 66-) ist in dem einen oder den mehreren zweiten Verbindern (60B) enthalten.

6. Das Elektro-Sattel-Fahrzeug gemäß Anspruch 4 oder 5, **gekennzeichnet durch** eine Steuerplatine (44) in der Haupt-Gehäuse-Einheit (54) und an der Batterie-Zelle (42), wobei die Kommunikations-Buchse (64) über die Eingangs-/Ausgangs-Komponente (46) elektrisch mit der Steuerplatine (44) verbunden ist.

7. Das Elektro-Sattel-Fahrzeug gemäß einem der Ansprüche 1 bis 6, **gekennzeichnet durch** eine Halterung (48), die an der Batterie-Zelle (42) befestigt ist,
wobei die Eingangs-/Ausgangs-Komponente (46) an der Halterung (48) fixiert ist.

8. Das Elektro-Sattel-Fahrzeug gemäß einem der Ansprüche 1 bis 7, **dadurch gekennzeichnet, dass** die Eingangs-/Ausgangs-Komponente (46) eine Eingangs-/Ausgangs-Schaltung (74) beinhaltet, bei der eine Sicherung (78) nur mit einem Pluspol (76) der Batterie-Zelle (42) verbunden ist.

9. Das Elektro-Sattel-Fahrzeug gemäß einem der Ansprüche 4 bis 6, **gekennzeichnet durch**
einen Lade-Eingang (32), der konfiguriert ist, um die Elektro-Fahrzeug-Batterie (30) zu laden;
einen Antriebs-Motor (24), der konfiguriert ist, so dass er von der Elektro-Fahrzeug-Batterie (30) mit Energie versorgt wird;
eine Motor-Steuer-Einheit (28), die konfiguriert ist, um Antriebs-Motor (24) zu steuern; ein Lade-Kabel (68), das konfiguriert ist, um die Lade-Buchse (62+, 62-) und den Lade-Eingang (32) elektrisch zu verbinden;
ein Entlade-Kabel (72), das konfiguriert ist, dass es die Entlade-Buchse (66+, 66-) und die Motor-Steuer-Einheit (28) elektrisch zu verbinden; und
ein Kommunikations-Kabel (70), das konfiguriert ist, um die Kommunikations-Buchse (64) und die Motor-Steuer-Einheit (28) elektrisch zu verbinden.

10. Das Elektro-Sattel-Fahrzeug gemäß einem der Ansprüche 1 bis 9, **gekennzeichnet durch** einen Rahmen (10) mit einem Paar von Unter-Rohren (34), die in Richtung der Fahrzeugbreite beabstandet sind,
wobei sich die Elektro-Fahrzeug-Batterie (30) zwischen dem Paar von Unter-Rohren (34) befindet.

11. Das Elektro-Sattel-Fahrzeug gemäß Anspruch 10, **dadurch gekennzeichnet, dass** der Verbinder (60) der Elektro-Fahrzeug-Batterie (30) zwischen dem Batterie-Gehäuse (40) und dem Paar von Unter-Rohren (34) angeordnet ist.

## Revendications

1. Véhicule électrique à selle comprenant :
une batterie de véhicule électrique (30), et
un moteur d'entraînement (24) configuré pour recevoir de l'énergie de la batterie de véhicule électrique (30),
la batterie de véhicule électrique (30) comprenant :
une cellule de batterie (42),
un composant d'entrée/sortie (46) configuré pour absorber ou délivrer de l'énergie depuis ou vers la cellule de batterie (42),
un carter de batterie (40) incluant une unité principale d'accueil (54) dans laquelle est logée la cellule de batterie (42), le carter de batterie (40) incluant une unité auxiliaire d'accueil (56) dans laquelle est logé le composant d'entrée/sortie (46), l'unité principale d'accueil (54) et l'unité auxiliaire d'accueil (56) étant adjacentes dans première direction (D1), l'unité auxiliaire d'accueil (56) présentant un contour de largeur plus petite dans une seconde direction (D2) perpendiculaire à la première direction (D1) que celle de l'unité principale d'accueil (54), le carter de batterie (40) comportant un évidement (58) constitué de surfaces externes adjacentes de l'unité principale d'accueil (54) et de l'unité auxiliaire d'accueil (56), et
un connecteur (60) situé dans l'évidement (58) du carter de batterie (40) et relié électriquement au composant d'entrée/sortie (46), **caractérisé en ce que** :
le carter de batterie (40) est situé de sorte à ce que la seconde direction (D2) corresponde à la direction de la largeur du véhicule.

2. Véhicule électrique à selle selon la revendication 1, **caractérisé en ce que** l'évidement (58) inclut un premier évidement (58A) et un second évidement (58B) sur les deux côtés dans la seconde direction (D2), et
le connecteur (60) inclut un ou plusieurs premiers connecteurs (60A) dans le premier évidement (58A) et un ou plusieurs seconds connecteurs (60B) dans le second évidement (58B) .

3. Véhicule électrique à selle selon la revendication 2, **caractérisé en ce que** le connecteur (60) dépasse de l'unité auxiliaire d'accueil (56) le long de la seconde direction (D2) dans chacun du premier évidement (58A) et du second évidement (58B).

4. Véhicule électrique à selle selon la revendication 2 ou la revendication 3, **caractérisé en ce que** le connecteur (60) inclut une prise de charge (62+, 62-), une prise de décharge (66+, 66-) et une prise de communication (64).

5. Véhicule électrique à selle selon la revendication 4, **caractérisé en ce que** la prise de charge (62+, 62-) est incluse dans le ou les premiers connecteurs (60A), et **en ce que** la prise de décharge (66+, 66-) est incluse dans le ou les seconds connecteurs (60B).

6. Véhicule électrique à selle selon la revendication 4 ou la revendication 5, **caractérisé par** une carte à circuit imprimé de commande (44) dans l'unité principale d'accueil (54) et sur la cellule de batterie (42),
dans lequel la prise de communication (64) est reliée électriquement à la carte à circuit imprimé de commande (44) par l'intermédiaire du composant d'entrée/sortie (46).

7. Véhicule électrique à selle selon l'une quelconque des revendications 1 à 6, **caractérisé par** un support (48) fixé à la cellule de batterie (42),
dans lequel le composant d'entrée/sortie (46) est immobilisé sur le support (48).

8. Véhicule électrique à selle selon l'une quelconque des revendications 1 à 7, **caractérisé en ce que** le composant d'entrée/sortie (46) inclut un circuit d'entrée/sortie (74), dans lequel est relié un fusible uniquement à la borne positive (76) de la cellule de batterie (42).

9. Véhicule électrique à selle selon l'une quelconque des revendications 4 à 6, **caractérisé par** un orifice d'entrée de charge (32) configuré pour charger la batterie du véhicule électrique (30),
un moteur d'entraînement (24) configuré pour recevoir de l'énergie en provenance de la batterie du véhicule électrique (30),
une unité de commande de moteur (28) configurée pour commander le moteur d'entraînement (24),
un câble de charge (68) configuré pour connecter électriquement la prise de charge (62+, 62-) et l'orifice d'entrée de charge (32),
un câble de décharge (72) configuré pour connecter électriquement la prise de décharge (66+, 66-) et l'unité de commande de moteur (28), et
un câble de communication (70) configuré pour connecter électriquement la prise de communication (64) et l'unité de commande de moteur (28).

10. Véhicule électrique à selle selon l'une quelconque des revendications 1 à 9, **caractérisé par** un cadre (10) incluant une paire de tubes descendants (34) écartés le long de la direction de la largeur du véhicule,
où la batterie du véhicule électrique (30) est interposée entre la paire de tubes descendants (34).

11. Véhicule électrique à selle selon la revendication 10, **caractérisé en ce que** le connecteur (60) de la batterie du véhicule électrique (30) est interposé entre le carter de batterie (40) et la paire de tubes descendants (34).
